# EUROPEAN PATENT SPECIFICATION

(11) **EP 3 171 529 B1**
(45) Date of publication and mention of the grant of the patent: **15.09.2021**
(21) Application number: 14897776.2
(22) Date of filing: 14.11.2014
(51) Int. Cl.: H04B 10/07, H04Q 11/00

(54) **METHOD AND DEVICE FOR POLLING AND DETECTING LINKS**
VERFAHREN UND VORRICHTUNG ZUR ABFRAGE UND DETEKTION VON LINKS
PROCÉDÉ ET DISPOSITIF D'INTERROGATION ET DE DÉTECTION DE LIAISONS

(30) Priority: 16.07.2014 CN 201410340556
(43) Date of publication of application: 24.05.2017
(73) Proprietor: ZTE Corporation, Shenzhen, Guangdong 518057 (CN)
(72) Inventor: ZHU, Guangyue, Shenzhen Guangdong 518057 (CN)
(74) Representative: Zoli, Filippo
(86) International application number: PCT/CN2014/091183
(87) International publication number: WO 2016/008240

(56) References cited:
- CN-A- 1 866 791
- CN-A- 101 247 666
- CN-A- 101 414 932
- US-A1- 2005 158 048
- US-A1- 2010 098 413
- XINZHU WANG ET AL: "A novel highly reliable WDM-PON system", ASIA COMMUNICATIONS AND PHOTONICS CONFERENCE AND EXHIBITION,, 2 November 2009 (2009-11-02), pages 1-10, XP031623404, ISBN: 978-1-55752-877-3

## Description

### Technical Field

The present invention relates to the field of communication, and in particular to a method and device for polling and detecting links.

### Background

In recent years, the passive optical network (referred to as PON) technology is the preferred technology in the optical access network field, which has obvious advantages in the aspects of access rate, bandwidth efficiency and splitting ratio, full service bearing capacity and security. The fiber to the home (referred to as FTTH) is a development direction of the fixed broadband access network, and the PON technology will be the main access technology adopted by the FTTH. But considering that the cost of the current FTTH is still relatively higher than the xDSL, in the situation that the current FTTH cannot settle the matter at one go, the integration networking of the PON and the xDSL is a better application form, and this networking model can use the technical features of the PON and the xDSL, provide a new broadband access mode, and meet the multi-service bandwidth requirement of the user. In this networking model, the xDSL (hereinafter referred to as the optical network unit (referred to as ONU)) is not only connected under the PON port of the optical line terminal (referred to as OLT), but also can be managed as an independent network element on the network manager.

The link polling is the basic function of the network management system, which refers to that the network management server detects whether communication with each network element is normal by means of sending a simple network management protocol (referred to as SNMP) message to all network elements managed by it, to determine whether the network element is in the managed state.

The link polling mode of the existing technology is that the network manager puts all the network elements into one polling queue, and performs synchronized-polling in multiple threads; if the link interruption is found, then the reason of the link interruption is fed back to the network manager, and the state of the network element is modified at the same time. At present, the reason of the ONU link interruption is checked in three aspects:
a. whether it is the interruption of the OLT link where the ONU is located (database query); if yes, then judgment in the following two steps b and c will not be performed.
b. whether the signal at the PON port where the ONU is located is lost (SNMP query); if yes, then judgment in step c is not performed.
c. whether the ONU itself is offline or power off (SNMP query).

In the above method, all the network elements are put in a same polling queue, the OLT and the ONU are not separated; if the OLT link is interrupted, all connected ONU devices will all be in link interruption, and all wait for polling in the polling queue, and the OLT may be in the rear of the queue. In this way, if the ONU under the OLT is first polled, when the reason of the link interruption is analyzed, the obtained OLT state is normal (actually the link is interrupted, while it has not been polled yet), and step b continues to be executed in this way; the PON port state is checked through the SNMP mode, this operation will be SNMP-overdue 15 seconds, and the reported reason of the link interruption is wrong. In this way, every ONU polling takes 15 seconds; if one OLT connects 200 ONUs, then it will need 50 minutes for polling these ONUs only, resulting in that the polling for the OLT link ranked at the rear of the queue cannot be executed for a long time, that is, the OLT cannot be timely polled and detected; the ONU link polling consumes a longer time, and the reason of the link interruption cannot be accurately fed back. The OLT link interruption is a very serious project fault, and must be timely recovered, however in this case, the network manager always displays that the OLT state is normal without any warning notice, the meaning of monitoring and control is lost, so the current polling mode has some defects.

Aiming at the problem that the OLT cannot get timely detection during the link polling because all the network elements are in the same polling queue in the existing technology, there is no effective solution put forward yet.

US 2010/0098413 A1 discloses a system for performance monitoring in a passive optic network.

### Summary of the Invention

Aiming at the problem that the OLT cannot get timely detection during the link polling because all the network elements are in the same polling queue in the existing technology, embodiments of the present invention provides a method and device for polling and detecting links as defined in the independent claims to at least solve the above problem.

The method includes: dividing Optical Line Terminals (OLT) and Optical Network Units (ONU) in a Passive Optical Network (PON) into an OLT polling queue and an ONU polling queue respectively; and polling and detecting the OLTs in the OLT polling queue and the ONUs in the ONU polling queue respectively.

In an exemplary embodiment, polling and detecting the ONUs in the ONU queue includes: detecting whether a link of the ONU is normal; and when detecting that the link of the ONU is abnormal, determining that the link of the ONU is failed.

In an exemplary embodiment, after determining that the link of the ONU is failed, the method further includes: determining a reason of a link failure of the ONU.

In an exemplary embodiment, determining a reason of a link interruption of the ONU includes at least one of following: determining that a link of the ONU itself is disconnected; determining that an OLT link where the ONU is located is disconnected; determining that a link where a PON port is located where the ONU is located is disconnected; determining that the ONU itself is offline; and determining that the ONU itself is power off.

In an exemplary embodiment, determining that the OLT link where the ONU is located is disconnected includes: when a link state of the OLT where the ONU is located queried from an OLT state database is normal, detecting a link state of the OLT; and when detecting that the link state of the OLT is disconnected, determining that the OLT link where the ONU is located is disconnected.

Polling and detecting the OLTs in the OLT polling queue and the ONUs in the ONU polling queue respectively includes: before polling and detecting the ONUs in the ONU queue, polling and detecting the OLTs in the OLT polling queue; updating states of the OLTs after polling into the OLT state database; and polling and detecting the ONUs in the ONU queue based on states of the OLTs in the updated OLT database.

The device for polling and detecting links includes: a division module, arranged to: divide Optical Line Terminals (OLT) and Optical Network Units (ONU) in a Passive Optical Network (PON) into an OLT polling queue and an ONU polling queue respectively; and a polling and detection module, arranged to: poll and detect the OLTs in the OLT polling queue and the ONUs in the ONU polling queue respectively.

In an exemplary embodiment, the device includes: a detection module, arranged to: detect whether a link of the ONU is normal; and a first determination module, arranged to: when detecting that the link of the ONU is abnormal, determine that the link of the ONU is failed.

In an exemplary embodiment, the device further includes: a second determination module, arranged to: determine a reason of the link failure of the ONU.

In an exemplary embodiment, the second determination module includes at least one of the following: a first determination unit, arranged to determine that a link of the ONU itself is disconnected; a second determination unit, arranged to determine that an OLT link where the ONU is located is disconnected; a third determination unit, arranged to: determine that a link where a PON port is located where the ONU is located is disconnected; a fourth determination unit, arranged to: determine that the ONU itself is offline; and a fifth determination unit, arranged to: determine that the ONU itself is power off.

In an exemplary embodiment, the second determination unit includes: a detection unit, arranged to: when a link state of the OLT where the ONU is located queried from an OLT state database is normal, detect a link state of the OLT; and a determination subunit, arranged to: when detecting that the link state of the OLT is disconnected, determine that the OLT link where the ONU is located is disconnected.

The polling and detection module includes: a first polling and detection unit, arranged to: before polling and detecting the ONUs in the ONU queue, poll and detect the OLTs in the OLT polling queue; an updating module, arranged to: update states of the OLTs after polling into the OLT state database; and a second polling and detection unit,
arranged to: poll and detect the ONUs in the ONU queue based on states of the OLTs in the updated OLT database.

Through embodiments of the present invention, Optical Line Terminals (OLT) and Optical Network Units (ONU) in a Passive Optical Network (PON) are divided into an OLT polling queue and an ONU polling queue respectively; and the OLTs in the OLT polling queue and the ONUs in the ONU polling queue are polled and detected respectively, which solves the problem that the OLT cannot get timely detection during the link polling because all the network elements are in the same polling queue in the existing technology, so that the OLT can obtain timely polling and detection.

### Brief Description of Drawings

The accompanying drawings described herein are used to provide further understanding for embodiments of the present invention and constitute a part of the present application. The illustrated embodiments of the present invention and the description thereof are used to explain the present invention, rather than constituting an inappropriate limitation to the present invention. In the accompanying drawings:
FIG. 1 is a flow chart of a device for polling and detecting links according to an embodiment of the present invention;
FIG. 2 is a block diagram of a device for polling and detecting links according to an embodiment of the present invention;
FIG. 3 is block diagram one of a device for polling and detecting links according to an alternative embodiment of the present invention;
FIG. 4 is block diagram two of a device for polling and detecting links according to an alternative embodiment of the present invention;
FIG. 5 is block diagram three of a device for polling and detecting links according to a preferred embodiment of the present invention;
FIG. 6 is block diagram four of a device for polling and detecting links according to an alternative embodiment of the present invention;
FIG. 7 is block diagram five of a device for polling and detecting links according to an alternative embodiment of the present invention;
FIG. 8 is a schematic diagram of polling network element links according to an alternative embodiment of the present invention;
FIG. 9 is a flow chart of polling ONU links according to an alternative embodiment of the present invention.

### Specific Embodiments

The present invention is described in detail with reference to the accompanying drawings and in combination with embodiments hereinafter. It should be illustrated that, in the case of not conflicting, the embodiments in the present application and features in the embodiments can be combined with each other.

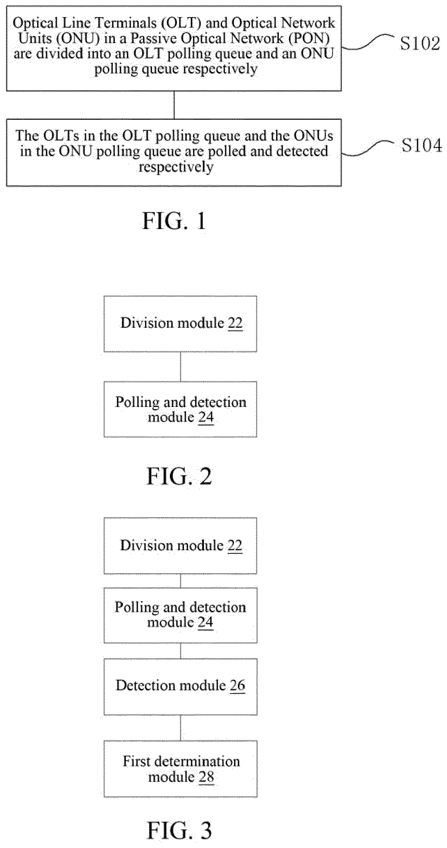

An embodiment of the present invention provides a method for polling and detecting links. FIG. 1 is a flow chart of a method for polling and detecting links according to an embodiment of the present invention, as shown in FIG. 1, including the following steps.

In step S102, Optical Line Terminals (OLT) and Optical Network Units (ONU) in a Passive Optical Network (PON) are divided into an OLT polling queue and an ONU polling queue respectively.

In step S104, the OLTs in the OLT polling queue and the ONUs in the ONU polling queue are polled and detected respectively.

Through the above steps, the Optical Line Terminals (OLT) and Optical Network Units (ONU) in a Passive Optical Network (PON) are divided into an OLT polling queue and an ONU polling queue respectively; and the OLTs in the OLT polling queue and the ONUs in the ONU polling queue are polled and detected respectively, thus enabling the OLTs to be timely polled and detected and avoiding the OLT to wait in the queue for a long time.

Alternatively, polling and detecting the ONUs in the ONU queue includes: detecting whether the link of the ONU is normal; if normal, then polling a next ONU; and determining that the link of the ONU is failed in a situation that it is abnormal.

As an alternative embodiment, after determining the link of the ONU is failed, a reason of the link failure of the ONU is determined, and the reason of the link failure of the ONU includes at least one of the following: a link of the ONU itself is disconnected; an OLT link where the ONU is located is disconnected; a link where a PON port is located where the ONU is located is disconnected; the ONU itself is offline; and the ONU itself is power off.

Alternatively, determining that the OLT link where the ONU is located is disconnected includes: searching for the link state of the OLT where the ONU is located in the OLT state database, judging whether the link state of the OLT is normal, and detecting the link state of the OLT when detecting that the link state of the OLT is normal; and if detecting that the link state of the OLT is disconnected, determining that the reason of the link interruption is that the OLT link where the ONU is located is disconnected.

The OLTs in the OLT polling queue are polled and detected before polling and detecting the ONUs in the ONU queue; it is to update states of the OLTs after polling into the OLT state database; and it is to poll and detect the ONU in the ONU queue based on the states of the OLTs in the updated OLT database. That method improves the priority of polling the OLT links, timely updates the link states of the OLTs, ensures the accuracy of the interruption reason of the connected ONU links, and improves the efficiency of the polling.

An embodiment of the present invention provides a device for polling and detecting links. FIG. 2 is a block diagram of a device for polling and detecting links according to an embodiment of the present invention, as shown in FIG. 2, the device includes:
a division module 22, arranged to: divide Optical Line Terminals (OLT) and Optical Network Units (ONU) in a Passive Optical Network (PON) into an OLT polling queue and an ONU polling queue respectively; and
a polling and detection module 24, arranged to: poll and detect the OLTs in the OLT polling queue and the ONUs in the ONU polling queue respectively.

FIG. 3 is block diagram one of a device for polling and detecting links according to an alternative embodiment of the present invention; as shown in FIG. 3, the device includes: a detection module 26, arranged to: detect whether a link of the ONU is normal; and a first determination module 28, arranged to: determine that the link of the ONU is failed when detecting that the link of the ONU is abnormal.

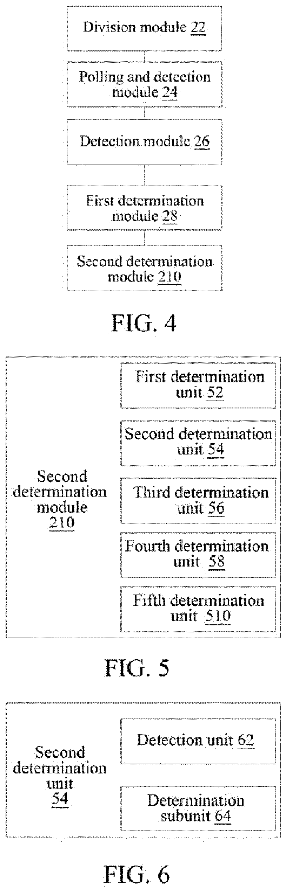

FIG. 4 is block diagram two of a device for polling and detecting links according to an alternative embodiment of the present invention; as shown in FIG. 4, the device further includes: a second determination module 210, arranged to: determine a reason of the link failure of the ONU.

FIG. 5 is block diagram three of a device for polling and detecting links according to an alternative embodiment of the present invention; as shown in FIG. 5, the second determination module 210 includes at least one of the following:
a first determination unit 52, arranged to determine that a link of the ONU itself is disconnected;
a second determination unit 54, arranged to determine that an OLT link where the ONU is located is disconnected;
a third determination unit 56, arranged to: determine that a link where a PON port is located where the ONU is located is disconnected;
a fourth determination unit 58, arranged to: determine that the ONU itself is offline; and
a fifth determination unit 510, arranged to: determine that the ONU itself is power off.

FIG. 6 is block diagram four of a device for polling and detecting links according to an alternative embodiment of the present invention; as shown in FIG. 6, the second determination unit 54 includes: a detection unit 62, arranged to: detect a link state of the OLT in a situation that a link state of the OLT where the ONU is located queried from an OLT state database is normal; and a determination subunit 64, arranged to: determine that the OLT link where the ONU is located is disconnected when detecting that the link state of the OLT is disconnected.

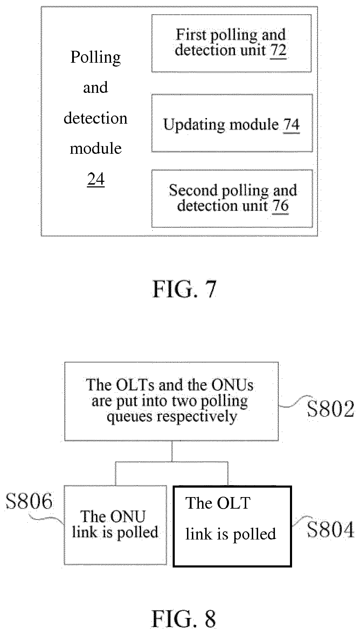

FIG. 7 is block diagram five of a device for polling and detecting links according to an embodiment of the present invention; as shown in FIG. 7, the polling and detection module 24 includes: a first polling and detection unit 72, arranged to: poll and detect the OLTs in the OLT polling queue before polling and detecting the ONUs in the ONU queue; an updating module 74, arranged to: update states of the OLTs after polling into the OLT state database; and a second polling and detection unit 76, arranged to: poll and detect the ONUs in the ONU queue based on states of the OLTs in the updated OLT database.

It is described in combination with alternative embodiments hereinafter, and the following alternative embodiments combine the above embodiments and the alternative implementation modes thereof.

The present alternative embodiment provides a method for improving efficiency of polling the network element links in the PON system, and the method includes:
the network manager puts all OLTs and ONUs of the whole network in two polling queues respectively; and starts the link polling to the network elements in the two queues respectively.

Information of one ONU to be polled therein is took out from the ONU polling queue; the ONU IP is acquired, and the network manager sends the SNMP Ping to it; if the ONU is returned normally, then it represents that the link is normal, and the ONU is polled completely, and it is to continue for the next ONU. Otherwise, it represents that the link is interrupted, and the process continues.

Obtaining the interruption reason of the ONU link is to obtain the state of the OLT where the ONU is located from the database; if the OLT link is interrupted, then the link interruption reason is fed back to the network manager as that the OLT link is interrupted. The ONU polling is completed and it is to continue for the next ONU; otherwise, the process continues.

It is judged that whether the signal is lost at the PON port where the ONU is located through an SNMP mode, and there are two situations now:
1. the OLT link is normal actually: if the signal is lost at the PON port, then the ONU link interruption reason is fed back to the network manager as that the signal is lost at the PON port. The ONU polling is completed and it is to continue for the next ONU; otherwise, the process continues.
2. the OLT link is interrupted, but the state is not updated timely: at this time, it will be timed out and enter abnormal handling when acquiring the state of the PON port, which forces to immediately poll the OLT to make the OLT state in the database correct. In this way, an accurate OLT state will be obtained during the next ONU polling; in this case, the accurate link state of the OLT can be obtained in the implementation of searching for the link state of the OLT where the ONU is located from the database, and the ONU polling can just be completed, and it is to continue for the next ONU.

Whether the state of the ONU is offline or power off is obtained through the SNMP mode; if yes, then the reason of the link interruption is fed back to the network manager as that the ONU is offline or power off; otherwise, an unknown reason is fed back; and the ONU polling is completed and the next ONU is continued to be polled.

Through the above alternative embodiments, compared with the existing technology, the problem that the OLT cannot be polled in time, the ONU link polling consumes a longer time, and the reason of the link interruption is not accurate, is fed back.

The above alternative embodiments are further illustrated by combining with the specific implementation modes hereinafter.

FIG. 8 is a schematic diagram of polling network element links according to an alternative embodiment of the present invention; as shown in FIG. 8, the method includes:
in step S802, the network manager puts all OLTs and ONUs of the whole network in two polling queues respectively. Herein, because the number of OLTs in the whole network is few relative to the ONUs, and the importance of the OLTs is more than that of the ONUs, the waiting time of the OLT in the queue for a long time can be avoided through synchronously polling the network elements in multiple threads in two queues.

In step S804, the OLT link is polled.

In step S806, the ONU link is polled.

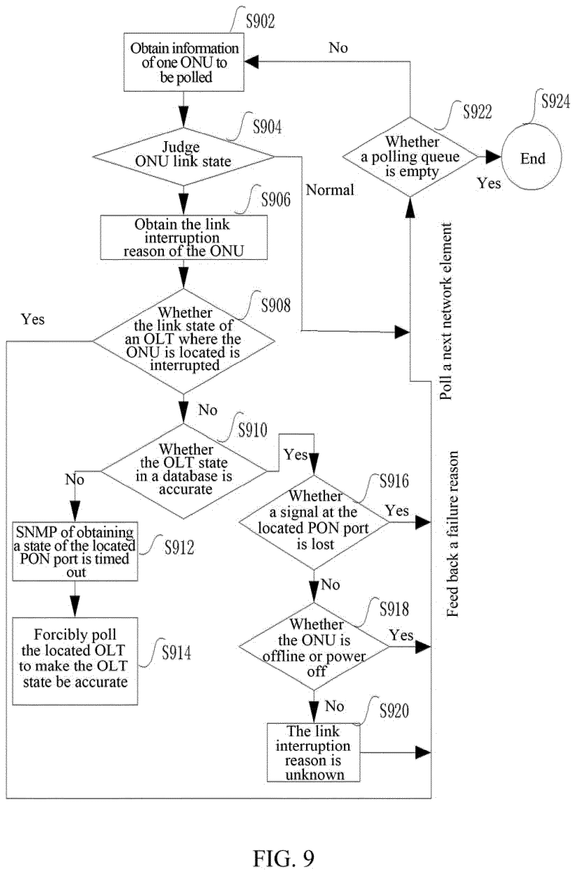

FIG. 9 is a flow chart of polling ONU links according to an alternative embodiment of the present invention; as shown in FIG. 9, the ONU in the ONU polling queue is polled to find out the reason of the failure of the ONU, which includes the following steps.

In step S902, the network manager takes one ONU to be polled.

In step S904, the state of the ONU link is judged. The network manager judges whether the ONU link is normal through the SNMP Ping network elements. If being normal, then the ONU polling is ended, and the next ONU is polled. Otherwise, step 906 is executed.

In step S906, the reason for the ONU link interruption is obtained.

Herein, the reason of the ONU link interruption is checked in three aspects: whether it is the interruption of the OLT link where the ONU is located (database query); whether it is the interruption of the PON port where the ONU is located (SNMP query); and whether the ONU itself is offline or power off (SNMP query).

In step S908, the link state of the OLT where the ONU is located is judged.

The OLT link state is read from the database; if it is the interruption, then the reason of the ONU link interruption is fed back as that the OLT link is interrupted, the ONU polling is ended, and the next ONU is polled. Otherwise, step 910 is executed.

In step S910, two processing flows are entered respectively according to the actual link state of the OLT.
1. the OLT link is really normal, and it is judged whether the link of the PON port where the ONU is located is interrupted (SNMP query); if yes, then the link interruption reason is fed back as that the link of the PON port is interrupted; otherwise, it is judged whether the ONU itself is offline or power off (SNMP query).
2. the OLT link is interrupted, but the state is not updated timely, and the step S912 is executed.

In step S912, the SNMP is timed out when acquiring the PON port state.

At this time, because the actual state of the OLT is the link interruption, it is resulted that the SNMP for acquiring the PON state is timed out for 15 seconds.

In step S914, the OLT where the ONU is located is forcibly polled, so that the real state of the OLT and the state in the database are consistent.

After polling the OLT, the interruption reason of the ONU link is fed back as that the SNMP for acquiring the PON port state is timed out, the ONU polling is ended, and the next ONU is polled.

In step S916, it is judged whether the PON port is interrupted.

Now, the OLT link state is accurate; if the obtained PON port is interrupted, then the link interruption reason is fed back as that the signal at the PON port is lost, the ONU polling is ended, and the next ONU is polled. Otherwise the step S918 is executed.

In step S918, it is judged whether the operating state of the ONU is offline or power off.

If the ONU is offline or power off, then the link interruption reason of the ONU is fed back as that the ONU is offline or power off, the ONU polling is ended, and the next ONU is polled. Otherwise the step S920 is executed.

In step S920, the link interruption reason of the ONU is fed back as unknown.

In step S922, before polling next ONU every time, it is judged whether the polling queue is empty.

In step S924, if the queue is empty, then the polling is ended. Otherwise, the next ONU polling process is entered.

Obviously, it can be understood by those skilled in the art that each module or each step above-mentioned in the present invention can be implemented by the universal calculating device, and they can be integrated in a single calculating device, or distributed in the network made up by a plurality of calculating devices. Alternatively, they can be implemented by the executable program codes of the calculating device. Accordingly, they can be stored in the storage device and implemented by the calculating device, and in some situation, the shown or described steps can be executed according to a sequence different from this place, or they are made to each integrated circuit module respectively, or a plurality of modules or steps therein are made into the single integrated circuit module to be implemented. This way, the present invention is not limit to any specific form of the combination of the hardware and software.

The above description is only the alternative embodiments of the present invention and is not intended to limit the present invention. For those skilled in the art, the present invention can have various changes and variations. The scope of the present invention is determined by the present claims.

### Industrial Applicability

The technical scheme provided by the embodiments of the present invention can be used in the mobile communication field, and solves the problem in the existing technology that the OLTs cannot be detected in time when all network elements poll the links in the same polling queue, so that the OLTs can be polled and detected in time.

## Claims

1. A polling and detecting method for a Passive Optical Network, PON, including Optical Network Units, ONUs, comprising:
polling and detecting ONUs in an ONU polling queue, **characterised by**
dividing (S102) Optical Line Terminals, OLTs, and Optical Network Units, ONUs, in the Passive Optical Network, PON, into an OLT polling queue and the ONU polling queue respectively;
polling and detecting the OLTs in the OLT polling queue; and
updating states of the OLTs after polling into an OLT state database; and in that
the ONUs in the ONU polling queue are polled and detected based on states of the OLTs in the updated OLT state database.

2. The method according to claim 1, wherein, polling and detecting the ONUs in the ONU queue comprises:
detecting whether a link of the ONU is normal; and
when detecting that the link of the ONU is abnormal, determining that the link of the ONU is failed.

3. The method according to claim 2, wherein after determining that the link of the ONU is failed, the method further comprises:
determining a reason of the link failure of the ONU.

4. The method according to claim 3, wherein, determining a reason of a link interruption of the ONU comprises at least one of following:
determining that a link of the ONU itself is disconnected;
determining that an OLT link where the ONU is located is disconnected;
determining that a link where a PON port is located where the ONU is located is disconnected;
determining that the ONU itself is offline; and
determining that the ONU itself is power off.

5. The method according to claim 4, wherein, determining that an OLT link where the ONU is located is disconnected comprises:
When a link state of the OLT where the ONU is located queried from an OLT state database is normal, detecting a link state of the OLT; and
when detecting that the link state of the OLT is disconnected, determining that the OLT link where the ONU is located is disconnected.

6. A polling and detecting device, comprising:
a division module (22), arranged to: divide Optical Line Terminals, OLTs, and Optical Network Units, ONUs, in a Passive Optical Network, PON, into an OLT polling queue and an ONU polling queue respectively; and
a polling and detection module (24), arranged to: poll and detect the OLTs in the OLT polling queue and the ONUs in the ONU polling queue respectively,
wherein the polling and detection module (24) comprises:
a first polling detection unit (72), arranged to poll and detect the OLTs in the OLT polling queue before polling and the detecting the ONUs;
an updating module (74), arranged to update states of the OLTs after polling into an OLT state database; and
a second polling and detection unit (76), arranged to poll and detect the ONUs in the ONU queue based on states of the OLTs in the updated OLT state database.

7. The device according to claim 6, wherein, the device comprises:
a detection module (26), arranged to: detect whether a link of the ONU is normal; and
a first determination module (28), arranged to: when detecting that the link of the ONU is abnormal, determine that the link of the ONU is failed.

8. The device according to claim 7, further comprising:
a second determination module (210), arranged to: determine a reason of the link failure of the ONU.

9. The device according to claim 8, wherein, the second determination module (210) comprises at least one of the following:
a first determination unit (52), arranged to determine that a link of the ONU itself is disconnected;
a second determination unit (54), arranged to determine that an OLT link where the ONU is located is disconnected;
a third determination unit (56), arranged to: determine that a link where a PON port is located where the ONU is located is disconnected;
a fourth determination unit (58), arranged to: determine that the ONU itself is offline; and
a fifth determination unit (510), arranged to: determine that the ONU itself is power off.

10. The device according to claim 9, wherein, the second determination unit (54) comprises:
a detection unit (62), arranged to: when a link state of the OLT where the ONU is located queried from an OLT state database is normal, detect a link state of the OLT; and
a determination subunit (64), arranged to: when detecting that the link state of the OLT is disconnected, determine that the OLT link where the ONU is located is disconnected.

## Patentansprüche

1. Verfahren zur Abfrage und Erkennung für ein passives optisches Netzwerk, PON, mit optischen Netzwerkeinheiten, ONUs, umfassend:
Abfragen und Erkennen von ONUs in einer ONU-Abfragewarteschlange, **gekennzeichnet durch**
Unterteilen (S102) von Optical-Line-Terminals, OLTs, und optischen Netzwerkeinheiten, ONUs, in dem passiven optischen Netzwerk, PON, in eine OLT-Abfragewarteschlange bzw. eine ONU-Abfragewarteschlange;
Abfragen und Erkennen der OLTs in der OLT-Abfragewarteschlange; und
Aktualisieren von Zuständen der OLTs nach dem Abfragen in eine Datenbank für OLT-Zustände; und **dadurch gekennzeichnet, dass**
basierend auf den Zuständen der OLTs in der aktualisierten Datenbank für OLT-Zustände die ONUs in der ONU-Abfragewarteschlange abgefragt und erkannt werden.

2. Verfahren nach Anspruch 1, wobei das Abfragen und Erkennen von ONUs in einer ONU-Abfragewarteschlange umfasst:
Erkennen, ob eine Verbindung der ONU normal ist; und
Bestimmen, dass die Verbindung der ONU fehlerhaft ist, wenn es erkannt wird, dass die Verbindung der ONU abnormal ist.

3. Verfahren nach Anspruch 2, wobei nach dem Bestimmen, dass die Verbindung der ONU fehlerhaft ist, das Verfahren weiterhin umfasst:
Bestimmen einer Ursache für den Fehler der Verbindung der ONU.

4. Verfahren nach Anspruch 3, wobei das Bestimmen einer Ursache für eine Unterbrechung der Verbindung der ONU zumindest einen der folgenden Schritte umfasst:
Bestimmen, dass eine Verbindung der ONU selbst getrennt ist;
Bestimmen, dass eine OLT-Verbindung, in der sich die ONU befindet, getrennt ist;
Bestimmen, dass eine Verbindung, in der sich ein PON-Port, an den die ONU angeschlossen ist, befindet, getrennt ist;
Bestimmen, dass die ONU selbst offline ist; und
Bestimmen, dass die ONU selbst ausgeschaltet ist.

5. Verfahren nach Anspruch 4, wobei das Bestimmen, dass eine OLT-Verbindung, in der sich die ONU befindet, getrennt ist, umfasst:
wenn ein aus einer Datenbank für OLT-Zustände aufgerufener Verbindungszustand des OLT, an dem sich die ONU befindet, normal ist, Erkennen eines Verbindungszustands des OLT; und
Bestimmen, dass die OLT-Verbindung, in der sich die ONU befindet, getrennt ist, wenn es erkannt wird, dass der Verbindungszustand des OLT getrennt ist.

6. Einrichtung zur Abfrage und Erkennung, umfassend
ein Unteilungsmodul (22), das dazu eingerichtet ist, Optical-Line-Terminals, OLTs, und optischen Netzwerkeinheiten, ONUs, in dem passiven optischen Netzwerk, PON, in eine OLT-Abfragewarteschlange bzw. eine ONU-Abfragewarteschlange zu unterteilen; und ein Abfrage- und Erkennungsmodul (24), das dazu eingerichtet ist, die OLTs in der OLT-Abfragewarteschlange und die ONUs in der ONU-Abfragewarteschlange jeweils abzufragen und zu erkennen,
wobei das Abfrage- und Erkennungsmodul (24) umfasst:
ein erstes Abfrage- und Erkennungsmodul (72), das dazu eingerichtet ist, vor der Abfrage und Erkennung der ONUs die OLTs in der OLT-Abfragewarteschlange abzufragen und zu erkennen;
ein Aktualisierungsmodul (74), das dazu eingerichtet ist, Zustände der OLTs nach dem Abfragen in eine Datenbank für OLT-Zustände zu aktualisieren; und
ein zweites Abfrage- und Erkennungsmodul (76), das dazu eingerichtet ist, basierend auf den Zuständen der OLTs in der aktualisierten Datenbank für OLT-Zustände die ONUs in der ONU-Warteschlange abzufragen und zu erkennen.

7. Einrichtung nach Anspruch 6, wobei die Einrichtung umfasst:
ein Erkennungsmodul (26), das dazu eingerichtet ist, zu erkennen, ob eine Verbindung der ONU normal ist; und
ein erstes Bestimmungsmodul (28), das dazu eingerichtet ist, zu bestimmen, dass die Verbindung der ONU fehlerhaft ist, wenn es erkannt wird, dass die Verbindung der ONU abnormal ist.

8. Einrichtung nach Anspruch 7, ferner umfassend
ein zweites Bestimmungsmodul (210), das dazu eingerichtet ist, eine Ursache für den Fehler der Verbindung der ONU zu bestimmen.

9. Einrichtung nach Anspruch 8, wobei das zweite Bestimmungsmodul (210) zumindest eine der folgenden Einheiten umfasst:
eine erste Bestimmungseinheit (52), die dazu eingerichtet ist, zu bestimmen, dass eine Verbindung der ONU selbst getrennt ist;
eine zweite Bestimmungseinheit (54), die dazu eingerichtet ist, zu bestimmen, dass eine OLT-Verbindung, in der sich die ONU befindet, getrennt ist;
eine dritte Bestimmungseinheit (56), die dazu eingerichtet ist, zu bestimmen, dass eine Verbindung, in der sich ein PON-Port, an den die ONU angeschlossen ist, befindet, getrennt ist;
eine vierte Bestimmungseinheit (58), die dazu eingerichtet ist, zu bestimmen, dass die ONU selbst offline ist; und
eine fünfte Bestimmungseinheit (510), die dazu eingerichtet ist, zu bestimmen, dass die ONU selbst ausgeschaltet ist.

10. Einrichtung nach Anspruch 9, wobei die zweite Bestimmungseinheit (54) umfasst:
eine Erkennungseinheit (62), die dazu eingerichtet ist, wenn ein aus einer Datenbank für OLT-Zustände aufgerufener Verbindungszustand des OLT, an dem sich die ONU befindet, normal ist, einen Verbindungszustand des OLT zu erkennen; und
eine Bestimmungsteileinheit (64), die dazu eingerichtet ist, zu bestimmen, dass die OLT-Verbindung, in der sich die ONU befindet, getrennt ist, wenn es erkannt wird, dass der Verbindungszustand des OLT getrennt ist.

## Revendications

1. Un procédé d'interrogation et de détection pour un réseau optique passif, PON, comprenant des unités de réseau optique, ONU, comprenant :
interroger et détecter les ONU dans une file d'attente d'interrogation d'ONU, **caractérisé par**
divider (S 102) des terminaux de ligne optique, OLT, et des ONU dans le PON en une file d'attente d'interrogation d'OLT et la file d'attente d'interrogation d'ONU, respectivement ;
interroger et détecter des OLTs dans la file d'attente d'interrogation de OLT ; et
remettre les états des OLTs après l'interrogation dans une base de données d'état de OLT ; et en ce que
les ONUs dans la file d'attente d'interrogation de ONU sont interrogés et détectés sur la base des états des OLTs dans la base de données d'état de OLT remise.

2. Le procédé selon la revendication 1, dans lequel, l'interrogation et la détection des ONUs dans la file d'attente des ONU comprend :
détecter si une liaison de l'ONU est normale; et
lorsqu'il est détecté que la liaison de l'ONU est anormale, déterminer que la liaison de l'ONU est défaillante.

3. Le procédé selon la revendication 2, dans lequel après avoir déterminé que la liaison de l'ONU est défaillante, le procédé comprend en outre :
déterminer une raison de l'échec de la liaison de l'ONU.

4. Le procédé selon la revendication 3, dans lequel, la détermination d'une raison d'une interruption de liaison de l'ONU comprend au moins l'un des suivants :
déterminer qu'une liaison de l'ONU elle-même est déconnectée ;
déterminer qu'une liaison de l'OLT où l'ONU est située est déconnectée ;
déterminer qu'une liaison où un port PON est situé où l'ONU est située est déconnectée ;
déterminer que l'ONU elle-même est hors ligne ; et
déterminer que l'ONU elle-même est hors tension.

5. Le procédé selon la revendication 4, dans lequel, déterminer qu'une liaison OLT où l'ONU est située est déconnectée comprend :
lorsqu'un état de liaison de l'OLT où l'ONU est située, interrogé d'une base de données d'états d'OLT, est normal, détecter un état de liaison de l'OLT ; et
lorsqu'il est détecté que l'état de liaison de l'OLT est déconnecté, déterminer que la liaison OLT où l'ONU est située est déconnectée.

6. Un dispositif d'interrogation et de détection, comprenant :
un module de division (22), agencé pour : diviser les terminaux de ligne optique, OLT, et les unités de réseau optique, ONU, dans un réseau optique passif, PON, en une file d'attente d'interrogation OLT et une file d'attente d'interrogation ONU, respectivement; et
un module d'interrogation et de détection (24), agencé pour: interroger et détecter les OLsT dans la file d'attente d'interrogation des OLT et les ONUs dans la file d'attente d'interrogation de ONU, respectivement,
dans lequel le module d'interrogation et de détection (24) comprend :
une première unité de détection d'interrogation (72), agencée pour interroger et détecter les OLTs dans la file d'attente d'interrogation d'OLT avant d'interroger et de détecter les ONUs ;
un module de mise à jour (74), agencé pour remettre les états des OLTs après l'interrogation dans une base de données d'états d'OLT ; et
une seconde unité d'interrogation et de détection (76), agencée pour interroger et détecter les ONUs dans la file d'attente d'ONU sur la base des états des OLTs dans la base de données d'états d'OLT remise.

7. Le dispositif selon la revendication 6, dans lequel, le dispositif comprend :
un module de détection (26), agencé pour : détecter si une liaison de l'ONU est normale ; et
un premier module de détermination (28), agencé pour : lorsqu'il est détecté que la liaison de l'ONU est anormale, déterminer que la liaison de l'ONU est défaillante.

8. Le dispositif selon la revendication 7, comprenant en outre :
un deuxième module de détermination (210), agencé pour : déterminer une raison de la défaillance de liaison de l'ONU.

9. Le dispositif selon la revendication 8, dans lequel, le second module de détermination (210) comprend au moins un des suivants :
une première unité de détermination (52), agencée pour déterminer qu'une liaison de l'ONU elle-même est déconnectée ;
une deuxième unité de détermination (54), agencée pour déterminer qu'une liaison OLT où l'ONU est située est déconnectée ;
une troisième unité de détermination (56), agencée pour : déterminer qu'une liaison où un port PON est situé où l'ONU est situé est déconnectée ;
une quatrième unité de détermination (58), agencée pour : déterminer que l'ONU elle-même est hors ligne ; et
une cinquième unité de détermination (510), agencée pour : déterminer que l'ONU elle-même est hors tension.

10. Le dispositif selon la revendication 9, dans lequel, la seconde unité de détermination (54) comprend :
une unité de détection (62), agencée pour : lorsqu'un état de liaison de l'OLT où l'ONU est située, interrogé d'une base de données d'états d'OLT, est normal, détecter un état de liaison de l'OLT ; et
une sous-unité de détermination (64), agencée pour : lorsqu'elle détecte que l'état de liaison de l'OLT est déconnecté, déterminer que la liaison de l'OLT où l'ONU est située est déconnectée.
